Europäisches Patentamt

European Patent Office

Office européen des brevets

(19)

(11) Numéro de publication: **0 348 534 B1**

# FASCICULE DE BREVET EUROPEEN

(12)

(45) Date de publication de fascicule du brevet: **11.03.92**   (51) Int. Cl.5: **B23H 7/06**

(21) Numéro de dépôt: **88105508.1**

(22) Date de dépôt: **07.04.88**

(54) **Machine à fil pour l'usinage par électroérosion.**

(43) Date de publication de la demande:
**03.01.90 Bulletin 90/01**

(45) Mention de la délivrance du brevet:
**11.03.92 Bulletin 92/11**

(84) Etats contractants désignés:
**DE FR GB IT**

(56) Documents cités:
**EP-A- 0 083 118**

**Eléments de la technique relevés: néant**

(73) Titulaire: **CHARMILLES TECHNOLOGIES S.A.**
**8-10, rue du Pré-de-la-Fontaine Zone industrielle de Satigny**
**CH-1217 Meyrin 1(CH)**

(72) Inventeur: **Babel, Bernard**
**10, Place des Ormeaux**
**CH-1213 Petit-Lancy/Ge(CH)**
Inventeur: **Balleys, François**
**10, Chemin du Bac**
**CH-1213 Petit-Lancy/Ge(CH)**
Inventeur: **Mamin, Pierre-Alexandre**
**32, avenue de Champel**
**CH-1206 Genève(CH)**

(74) Mandataire: **Hugelin, Christiane**
**c/o CHARMILLES TECHNOLOGIES SA Case postale 373**
**CH-1217 Meyrin 1(CH)**

Rank Xerox (UK) Business Services

## Description

L'invention se rapporte à une machine pour l'usinage par électroérosion d'une pièce-électrode au moyen d'un fil-électrode tendu et dévidé entre deux guides-fil. Dans leur forme la plus simple, de telles machines permettent de découper une pièce le long d'une trajectoire située dans un plan, appelé ici "plan principal", perpendiculaire à la partie du fil tendue entre les guides. Ceci permet une "coupe droite", autrement dit le découpage de surfaces dont toutes les génératrices sont perpendiculaires au plan principal.

Pour obtenir des formes plus générales, par exemple des pièces avec dépouille, il est nécessaire, soit d'incliner le fil par rapport à la normale au plan principal, appelée "axe neutre" dans ce qui suit, soit de basculer la pièce à usiner par rapport à ce plan. De nombreuses méthodes ont été proposées pour réaliser la première alternative. On peut en distinguer trois types :

a) déplacement de l'un des guides par rapport à l'autre, parallèlement au plan principal, combiné à une rotation des guides autour d'un axe parallèle à ce plan principal, tel que décrit, par exemple, dans le brevet US 4,431,896, dans le brevet allemand DE 1,615,508, dans les brevets EP 64068, 64069 et 64070 ou dans la demande de brevet EP 201.911; ce déplacement peut être obtenu au moyen de dispositifs variés : table à mouvements croisés, dispositifs hydrauliques, translation selon un axe combiné à des tables rotatives, etc...;

b) un basculement à la Cardan de l'ensemble formé par les deux guides, autour de deux axes de rotation situés dans le plan de la trajectoire à découper, tel que décrit, par exemple, dans le brevet US 4,485, 288 ou dans le brevet allemand DE 2 413 627;

c) la combinaison d'une rotation des guides-fil autour d'un axe de rotation parallèle à l'axe neutre avec un déplacement d'au moins un des guides par rapport à l'autre, parallèlement au plan principal, comme le proposent, par exemple, les brevets américains US 4,123,645 et US 4,420,671.

En pratique, la deuxième méthode, qui est la seule à conserver la longueur du fil-électrode tendu entre les deux guides quel que soit l'angle d'inclinaison, exige de grands espaces libres pour que les rotations puissent s'effectuer sans collisions, en particulier avec les dispositifs de fixation de la pièce à usiner; de plus elles rendent malaisée l'obtention des précisions devenues usuelles en électroérosion.

La première méthode présente également des inconvénients liés à un phénomène d'encombrement : il est devenu souhaitable, pour usiner à vitesse satisfaisante, de rapprocher le plus possible les têtes d'usinage portant les guides-fil de la surface de la pièce à usiner. Ce faible espace subsistant entre la pièce et l'extrémité des têtes d'usinage ne permet donc pas d'incliner d'un angle important les têtes d'usinage et donc le fil-électrode. On reste donc limité à de faibles angles de dépouille.

Or l'un des buts de la présente invention est de pouvoir usiner avec de grandes dépouilles, c'est-à-dire d'effectuer des découpes selon des surfaces de forte inclinaison, l'angle du fil-électrode avec l'axe neutre étant important, de l'ordre, par exemple, de 30°. C'est pourquoi la présente invention a trait à la troisième méthode. Elle a pour objet une machine pour l'usinage par électroérosion d'une pièce-électrode au moyen d'un fil-électrode tendu et dévidé entre deux guides-fil, avec au moins un dispositif à mouvements croisés portant l'un de ces guides-fil et agencé pour le déplacer dans un plan parallèle à celui de la trajectoire à découper de façon à incliner le fil d'un angle prédéterminé par rapport à un axe neutre perpendiculaire à ce plan et caractérisé par le fait que ce dispositif est également agencé pour faire pivoter le guide-fil sur lui-même autour d'un axe mobile parallèle à cet axe neutre, passant par ce guide et se déplaçant avec lui. Elle peut également être caractérisée par un dispositif agencé pour asservir la rotation du guide-fil aux déplacements du dispositif à mouvements croisés.

Lorsqu'on prévoit d'usiner avec de grands angles d'inclinaison, les guides fermés présentent certains inconvénients, en particulier à cause de leur précision limitée. Par guides "fermés: on entend des guides ayant en général une symétrie de rotation, généralement en forme d'anneaux, du type des guides-filière ou des guides-canon, ou du type, par exemple, décrit dans le brevet US 4,205,212. Ce manque de précision est dû en particulier aux frottements qu'ils opposent à l'avancement du fil et aux contraintes subies par ce dernier lorsqu'il est fortement incliné par rapport à l'axe du guide et à sa rigidité. Ceci augmente le risque de rupture et conduit à diminuer la vitesse d'usinage. Ainsi, il faut réduire la vitesse d'usinage de moitié, par exemple, lorsqu'on usine avec un angle de 30° ou plus. Etant données, d'autre part, les difficultés rencontrées pour enfiler et réenfiler le fil dans de tels guides, la machine selon la présente invention comporte, de préférence, des guides ouverts.

Ces guides peuvent avoir toutes sortes de configurations, telles, par exemple, celles décrites dans US 4,123,645 ou US 4,420,671. Ils présentent en général une encoche ou rainure périphérique où vient se loger le fil selon un "profil de guidage" donné. Il peut s'agir tout simplement d'un galet pivotable uniquement autour d'un axe parallèle à l'axe neutre ou d'une roulette ou d'un cylindre, pivotable autour d'un axe parallèle à l'axe neutre et passant, de préférence, par leur centre de symétrie et pivotable également autour de leur axe de révolution, munis d'une encoche circulaire de guidage pour le fil. Le plan de cette encoche est, de préférence, perpendiculaire à l'axe de révolution. Ces guides peuvent être conducteurs de l'électricité et servir à l'alimentation du fil en courant d'usinage.

La machine de la présente invention présente de notables avantages par rapport aux dispositifs décrits dans les brevets américains US 4,123,645 et US 4,420,671 : précision meilleure avec la table à mouvements croisés de la présente invention qu'avec les blocs à commande manuelle et le disque tournant décrit dans US 4,123,645 ou qu'avec l'hélice couplée avec le dispositif rotatif décrit dans le brevet US 4,420,671. Un autre désavantage du dispositif de US 4,123,645 est la forme des guides-fil qui nécessite un asservissement de l'orientation de ceux-ci de façon à maintenir le plan de leur encoche à un angle prédéterminé avec la direction de découpe, afin de stabiliser le fil-électrode dans l'encoche du guide et d'assurer la fiabilité du découpage. De même, la forme beaucoup plus simple des guides-fil de la présente invention est aussi un avantage par rapport aux guides hélicoïdaux décrits dans US 4,420,671.

Mais surtout, on voit facilement que l'agencement de la présente invention permet de positionner les guides avec toute la précision nécessaire, sans exiger des dispositifs de positionnement des guides des tolérances extrêmement faibles. En effet, le (ou les) guide-fil pivote sur lui-même, c'est-à-dire que l'axe parallèle à l'axe neutre autour duquel tourne ce guide passe évidemment par lui, (en étant de préférence contenu dans le plan du profil de guidage, et passant en particulier par son centre de symétrie) et se meut avec lui lors de ses déplacements dans le plan parallèle au plan principal. Par conséquent, le décalage horizontal entre cet axe et le point où le fil quitte le guide reste toujours très faible, même lorsque le fil est très incliné. L'influence de la précision de l'orientation du guide sur le positionnement de ce point, qui lui-même détermine la position exacte du fil, reste donc également faible, ce qui simplifie d'autant la réalisation mécanique du dispositif d'orientation du (ou des) guide et réduit son encombrement à des valeurs acceptables.

Rappelons que dans les dispositifs décrits dans les brevets US 4,123,645 et US 4,420,671, l'axe de rotation est fixe et passe par le centre des dispositifs tournants sur lesquels sont fixés les guides. Il est donc confondu avec l'axe neutre. Lorsque les guides sont décalés dans un plan parallèle au plan principal afin d'incliner le fil, ils ne pivotent pas sur eux-même, mais effectuent une rotation autour de l'axe neutre.

Un autre avantage du présent dispositif est qu'il permet d'orienter les guides, non plus de façon à former un angle donné avec la trajectoire à découper, comme décrit dans US 4,123,645, mais de façon à ce que les plans de chacun des "profils de guidage" (c'est-à-dire les trajectoires imposées au fil autour des guides-fil) soient confondus et contiennent aussi la partie du fil tendue entre les deux guides. Ceci évite que le fil ne vienne frotter fortement, latéralement, sur le guide, ainsi que l'apparition de torsions, facilite son glissement dans les guides, diminue les risques de le voir sortir de son logement et empêche une modification de sa tension mécanique lorsqu'on l'incline.

Une telle orientation était impossible avec les mécanismes connus :
- selon US 4,123,645, les plans des profils de guidage sont forcément parallèles car les guides-fil doivent être orientés de façon à faire un angle donné avec la trajectoire. Ils ne peuvent donc être confondus, sauf si le déplacement du guide destiné à incliner le fil par rapport à l'axe neutre a été effectué selon un seul axe situé dans le plan du profil de guidage de ce guide, ce qui limite évidemment les possibilités;
- selon US 4,420,671, les guides-fil sont des cylindres avec une encoche hélicoïdale, inclinés par rapport au plan principal afin que le plan du profil de guidage soit perpendiculaire à ce plan principal. C'est la rotation de chacun de ces guides autour de leur axe de révolution qui fait avancer le fil dans la direction de cet axe. Les axes de révolution de ces deux guides sont croisés. Les plans des profils de guidage ne peuvent donc jamais être confondus ni contenir la partie de fil tendue entre les guides.

Par ailleurs, l'invention évite de basculer le guide autour d'un axe parallèle au plan de la trajectoire à découper pour l'orienter. Ceci simplifie la construction et permet d'entourer le guide d'un carénage formant buse d'injection de liquide d'usinage. Ce carénage n'aura pas besoin de basculer autour d'un axe horizontal, et pourra donc facilement être conformé de manière à ce que l'embouchure de la buse reste constamment à proximité immédiate de la pièce à usiner, ce qui est indispensable pour la rapidité et la précision de l'usinage.

L'invention sera maintenant illustrée par la description d'un mode de réalisation et à l'aide du dessin, dans lequel

la figure 1 est une coupe schématique d'une machine selon l'invention,

la figure 2 montre plus en détail le parcours du fil au voisinage de la pièce à usiner, et

la figure 3 montre trois vues en plan de deux guides en forme de roulette ainsi que du fil dans la zone d'usinage (3a) , et un schéma (3b) illustrant les relations entre les déplacements du guide et l'inclinaison du fil.

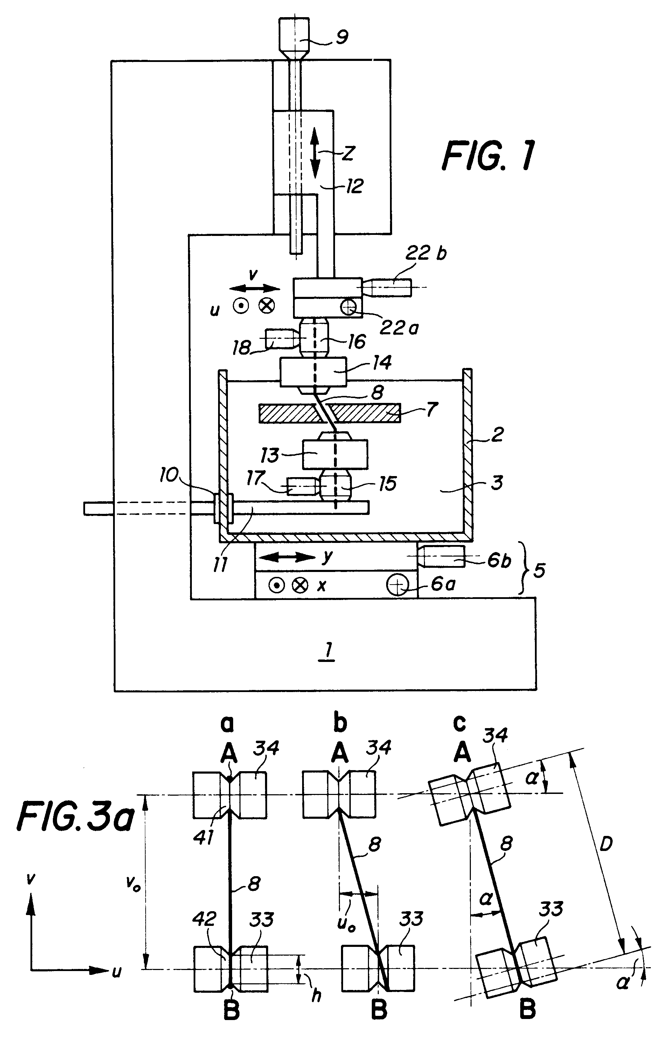

Dans la figure 1, le chiffre 1 désigne le bâti d'une machine à électroérosion par fil, et 2 le bac de cette machine, qui peut être rempli d'un liquide diélectrique 3 . Le bac est monté sur une table 5 à axes croisés X, Y, actionnée par deux moteurs 6a et 6b. Une pièce à usiner 7 immergée dans le diélectrique 3 se meut avec le bac 2 dans les directions X et Y, c'est-à-dire dans le plan horizontal de la trajectoire à découper. Un bras inférieur 11 reste en général fixe par rapport au bâti 1, un joint mobile étant prévu pour permettre des mouvements relatifs du bras et du bac. Un bras supérieur 12 peut être actionné verticalement selon l'axe Z à l'aide d'un moteur 9, pour usiner des pièces de différentes épaisseurs. La partie active d'un fil-électrode 8 est tendue entre deux guides (non visibles sur le dessin) enfermés chacun dans l'une des deux têtes d'usinage 13 et 14. Ce fil, qui est constamment renouvelé pendant l'usinage, défile en continu depuis la tête 14 jusqu'à la tête 13 par laquelle il est évacué par des moyens connus, non montrés au dessin pour plus de clarté.

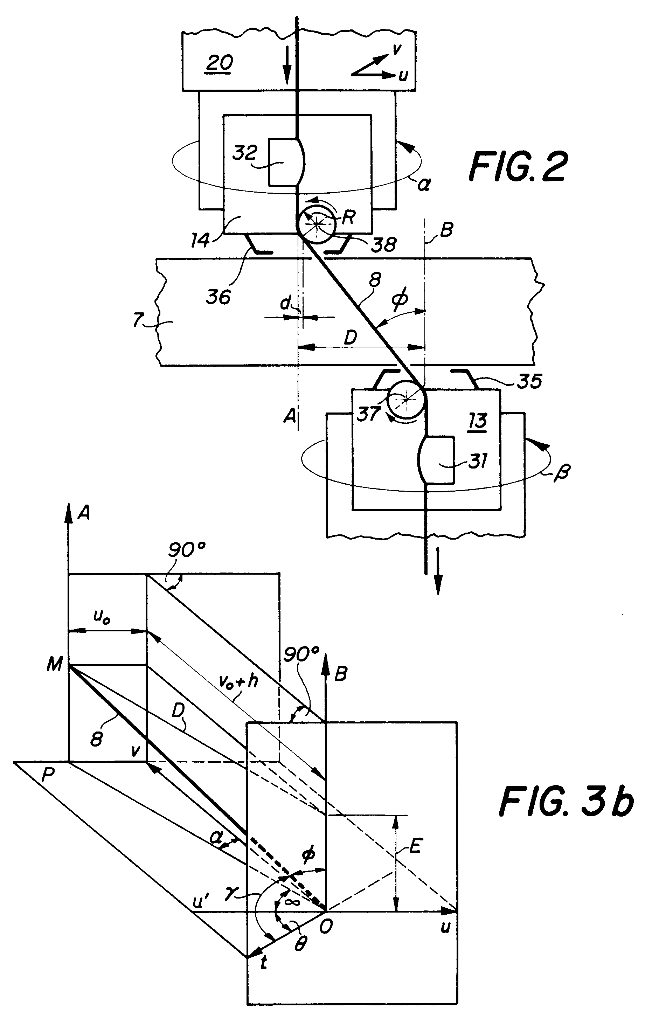

La tête d'usinage inférieure 13 est montée sur le bras 11 par l'intermédiaire d'un organe rotatif 15 tournant autour d'un axe vertical sous l'action d'un moteur 17 capable de donner à la tête d'usinage inférieure toutes les orientations possibles autour de cet axe. De façon similaire, la tête d'usinage supérieure 14 est portée par un organe rotatif 16 pouvant l'orienter dans tous les sens autour d'un autre axe vertical. Contrairement à l'organe rotatif inférieure, ce second organe rotatif 16 n'est pas monté directement sur le bras qui le porte, mais par l'intermédiaire d'une table auxiliaire à axes croisés, elle-même fixée au bras supérieur 12. Chacun des axes croisés u-v de cette table auxiliaire peut, comme cela est représenté au dessin, être parallèle à l'un des axes X, Y de la table supportant le bac, sans toutefois que cela soit nécessaire. Cette table auxiliaire est actionnée dans les directions u et v par deux moteurs 22a, respectivement 22b, dont l'action permet d'incliner la partie travaillante ou active du fil 8 dans toutes les directions, par rapport à un axe neutre normal au plan de la trajectoire à découper, grâce au décalage horizontal des têtes 13 et 14 l'une par rapport à l'autre. Pour une valeur donnée de l'inclinaison, ce décalage sera évidemment fonction de la distance verticale E entre les guides déterminée par la position en direction Z du bras supérieur 12, comme développé en relation avec la figure 3b. Tous les moteurs mentionnés seront en général commandés de manière connue dans le métier par une unité de commande numérique programmée pour obtenir la trajectoire désirée dans le plan principal X, Y, l'inclinaison voulue du fil par rapport à la verticale, et l'orientation de chacune des têtes de guidage autour d'un axe vertical. En général, cette orientation sera commandée de manière à rendre coplanaires les trajectoires du fil à l'intérieur des deux guides et sa partie active.

La figure 2 est un schéma plus détaillé de la trajectoire du fil 8 à travers la pièce à usiner 7, d'où la plupart des détails mécaniques ont été omis. Dans cette figure, le fil est amené par le haut à la tête d'usinage 14 montée sur la table auxiliaire 20 qui n'est représentée dans la figure 2 que par une indication symbolique des directions u et v. La tête d'usinage peut prendre une orientation quelconque $\alpha$ autour d'un axe A parallèle à l'axe neutre B. Cette tête porte un contact frotteur 32 alimentant le fil en courant d'usinage, ainsi qu'une roulette servant de guide et rotative autour d'un axe 38 orthogonal à l'axe neutre. Le rayon R de cette roulette sera choisi suffisamment grand par rapport à celui du fil pour que ce dernier puisse être considéré comme infiniment souple. Ceci élimine les erreurs de guidage dues à la rigidité propre du fil. La tête d'usinage inférieure 13 est également orientable et peut prendre une orientation quelconque $\beta$ autour d'un axe B confondu ici avec l'axe neutre. En général on maintiendra $\beta$ égal à $\alpha$, et on commandera ces deux angles au moyen du même signal de commande. La tête inférieure 13 comporte aussi un frotteur 31 pour l'alimentation du fil en courant d'usinage et une roulette qui sert de guide inférieur. Cette roulette tourne fou autour d'un axe 37 orthogonal à l'axe neutre et son rayon satisfait aux mêmes conditions que celui de la roulette supérieure.

Chacune des têtes d'usinage comporte une buse 35, 36 pour concentrer un jet de liquide d'usinage en direction de la découpe réalisée dans la pièce. Ces buses peuvent soit tourner avec les têtes d'usinage autour des axes A et B, soit garder toujours la même orientation, mais leurs orifices restent parallèles au plan de la trajectoire à découper, encore appelé plan principal d'usinage, et peuvent donc être placés à proximité immédiate de la pièce à usiner 7, comme il est esquissé dans la figure 2 et rester à cette distance, indépendamment de l'inclinaison du fil, ce qui améliore la vitesse et la précision de l'usinage. De plus, lors du découpage, cette disposition de la buse et le grand diamètre de son embouchure permettent d'arroser généreusement le sillon déjà découpé à l'arrière du fil, ce qui s'avère plus bénéfique pour l'usinage qu'un jet de faible diamètre dirigé exactement le long du fil, tel que le produisent en général les buses orientables.

Lors d'une découpe droite, c'est-à-dire en position neutre, lorsque les axes A et B sont confondus, les orientations $\alpha$ et $\beta$ n'influent pas sur la position du fil 8 entre les deux roulettes-guides 33, 34. La précision de l'usinage est alors indépendante de celle des organes qui déterminent les orientations $\alpha$ et $\beta$. Lorsque les axes A et B sont décalés d'une distance D comme indiqué à la figure 2, le fil étant incliné d'un angle $\phi$ sur l'axe neutre, une imprécision $\Delta\alpha$ de l'orientation $\alpha$ de la tête supérieure entraînera un déplacement de $d.\Delta\alpha$ de l'extrémité supérieure du segment de fil tendu entre les guides, où d est la distance entre l'axe A et une droite parallèle passant par le point où le fil 8 quitte la roulette supérieure en direction de la roulette inférieure. Cette distance d est telle que

$$d = R(1 - \cos\phi)$$

avec $0 \leq \phi \leq 90°$.

Lorsque l'angle $\phi$ varie de $0°$ à $90°$, d varie de 0 à R. Si l'inclinaison $\phi$ du fil sur l'axe neutre reste inférieure à $45°$, on aura même

$$d < R(1 - \sqrt{2}/2) \text{ ou } d < 0,3 \text{ R.}$$

Le même raisonnement s'applique à l'erreur de positionnement du fil due à une imprécision dans l'orientation $\beta$ de la tête d'usinage inférieure 13 et un raisonnement analogue s'applique au déplacement vertical, en fonction de l'inclinaison du fil, du point où celui-ci quitte la roulette. Il s'ensuit que, contrairement aux agencements connus, l'erreur d'usinage due à la tolérance dans l'orientation des têtes lorsque celles-ci sont décalées l'une par rapport à l'autre reste toujours faible et possède de plus une limite supérieure facile à déterminer et indépendante de la valeur du décalage D.

La figure 3a est une vue de dessus qui montre l'orientation des roulettes-guides 33 et 34 dans trois positions différentes lors d'un décalage réciproque de ces guides d'une distance $u_o$ selon l'axe u et d'une distance $v_o$ selon l'axe v. Chacun des guides 33, 34 est une roulette cylindrique comportant une gorge périphérique 41, 42 dans laquelle court le fil 8. On appelle h le diamètre des roulettes au fond de ces gorges. Comme dans la figure 2, A et B désignent les axes de rotation de la tête d'usinage supérieure, respectivement inférieure, ces axes étant perpendiculaires au plan du dessin dans le cas de la figure 3a. Pour simplifier celle-ci, on suppose que dans la position neutre d'origine (non représentée), c'est-à-dire quand les axes A et B des têtes d'usinage sont confondus avec l'axe neutre, les axes des roulettes 33, 34 sont parallèles à la direction u. L'inclinaison du fil peut alors être obtenue en trois étapes. Un déplacement $v_o + h$ fait passer de la position neutre à la position a de la figure 3a, un déplacement $u_o$ fait ensuite passer

à la position b, et finalement une rotation d'angle $\alpha$ des deux têtes autour de l'axe A, respectivement B, fait passer à la position c dans laquelle les plans bissecteurs des gorges des deux roulettes coincident et contiennent la partie du fil tendue entre elles. Ceci est la position de travail préférée, dans laquelle le fil 8 est soumis à un minimum de contraintes et reste bien dans le profil de guidage de chaque guide; la pratique a montré que lorsque le fil ne reste pas dans le plan bissecteur de la gorge, il s'ensuit des erreurs d'usinage considérables.

Connaissant E, la distance entre les guides avant d'incliner le fil, et h, le diamètre du profil de guidage des guides-fil, il est possible de calculer les valeurs instantanées à donner à $u_o$ et $v_o$ et à l'angle $\alpha$ afin d'obtenir un angle de dépouille $\phi$ avec un fil 8, ce dernier faisant un angle $\gamma$ avec la trajectoire à découper ou sa tangente dans le plan principal, c'est-à-dire avec la direction t indiquée à la figure 3b.
Cette direction t fait avec l'axe u un angle $\theta$ qui varie au cours de l'usinage lorsque la trajectoire n'est pas rectiligne. Remarquons que $\alpha$, l'angle dont il faut faire pivoter les guides-fil pour les réorienter selon la présente invention, est également l'angle entre l'axe v et la projection du fil sur le plan P défini par les axes u et v, ( v étant perpendiculaire à u).

Donc la détermination de $\alpha$ (et de $u_o$ et $v_o$) en fonction de la variation des angles $\phi$ et $\theta$ est possible.
Si la machine comporte déjà les moyens pour asservir les valeurs de $u_o$ et $v_o$ aux variations de $\phi$ et $\theta$, on peut également déterminer $\alpha$ grâce à la relation qui le lie à $u_o$ et $v_o$ : $\text{tg }\alpha = u_o / (v_o + h)$
La machine selon la présente invention comportera donc, de préférence, un dispositif à mouvements croisés dont les mouvements selon les axes u et v seront asservis à la valeur de l'angle de dépouille $\phi$, ainsi, éventuellement qu'à celle des angles $\theta$ et $\gamma$, par exemple, et deux organes agencés et programmés pour faire pivoter les guides-fil d'un angle $\alpha$ également asservis à la valeur de $\phi$ (et éventuellement de $\theta$ et $\gamma$).

Signalons que dans le cas ou le fil est maintenu perpendiculaire à la trajectoire à découper, on remarque, en considérant toujours la figure 3b au point 0, que la projection du fil sur le plan P est également perpendiculaire à la direction t et donc que $\alpha = \theta$ : l'angle dont il faut faire pivoter les guides-fil pour les réorienter selon la présente invention est égal à l'angle $\theta$ défini ci-dessus.

Signalons également que les guides-fil peuvent pivoter autour d'axes qui ne sont pas nécessairement confondus avec les axes A et B définis précédemment. La projection de ces axes de pivotement sur le diamètre du profil de guidage peut être située en d'autres points de ce diamètre. En particulier, ces axes peuvent passer par le centre de symétrie de ce profil; dans ce cas, $\text{tg}\alpha = u_o/v_o$ et $D^2 = ( u_o + h.\sin\alpha )^2 + (v_o + h.\cos\alpha)^2$

Il est à noter que la décomposition en trois mouvements décrite ici n'est donnée qu'à titre d'illustration et que lorsque les mouvements des têtes sont commandés numériquement le déroulement des opérations sera en général simultané. Il est à noter aussi que les guides en forme de roulettes 33, 34 peuvent être remplacés par des galets fixes en un matériau suffisamment résistant à l'abrasion pour n'être pas usé prématurément par le frottement du fil. Dans les deux cas, le maintien latéral du fil peut être obtenu au moyen de gorges dans lesquelles il est engagé ou par d'autres moyens. Dans les deux cas également, il peut être avantageux d'omettre les frotteurs 31, 32 (figure 2) pour l'alimentation du fil en courant d'usinage, et d'effectuer cette alimentation au travers des guides 33, 34, qui devront alors être réalisés en un matériau conducteur.

Dans les exemples de réalisation ci-dessus, les guides-fil sont des guides ouverts à symétrie de révolution dont le profil de guidage est dans le même plan que le centre de symétrie. La présente invention n'est évidemment pas limitée à ce type de guide et de positionnement. En particulier, si l'un des guides ne se déplace pas par rapport à l'axe neutre, dans un plan parallèle au plan principal, il peut être un guide fermé, ce qui supprime l'opération de recentrage dès qu'on change le diamètre du fil, ( car le positionnement d'un guide ouvert doit être adapté au diamètre du fil-électrode ), et permet de ne mettre en oeuvre qu'une seule broche tournante pour n'orienter qu'un seul des deux guides.

Signalons toutefois les avantages des guides ouverts : moins de frottements et disparition des opérations d'enfilage et de réenfilage, comme déjà indiqué dans l'introduction, possibilité d'utiliser des fils de tous les diamètres sans avoir à changer de guide, configuration plus simple et donc moins coûteuse, angle de dépouille illimité. De plus, lorsque le guide tourne sur son axe de révolution il s'use très lentement et modifie peu la tension mécanique du fil en fonction de l'angle de dépouille. L'erreur de positionnement du fil reste très faible, même aux grands angles de dépouille; elle est par exemple au plus égale à 1 $\mu$m avec un angle de dépouille de 30°, un guide de 10 mm de diamètre et une broche tournante indexée à 4000 pas/tour.

Le décalage du guide-fil dans un plan parallèle au plan principal peut être réalisée soit par une table à mouvements croisés comme illustré ci-dessus, grâce, par exemple, à une translation pouvant se décomposer selon deux axes de coordonnées cartésiennes u et v, soit par un mécanisme combinant une translation suivant l'un de ces axes avec une rotation.

## Revendications

1. Machine pour l'usinage par électroérosion d'une pièce-électrode (7) au moyen d'un fil-électrode (8) tendu et dévidé entre deux guides-fil (33,34), avec au moins un dispositif (22a,22b) à mouvements croisés portant l'un de ces guides-fil et agencé pour le déplacer dans un plan parallèle à celui de la trajectoire à découper de façon à incliner le fil d'un angle ($\phi$) prédéterminé par rapport à un axe neutre (B) perpendiculaire à ce plan et caractérisé par le fait que ce dispositif (15,16,17,18) est également agencé pour faire pivoter le guide-fil sur lui-même autour d'un axe mobile (A), parallèle à cet axe neutre, passant par ce guide et se déplaçant avec lui.

2. Machine selon la revendication 1, caractérisée par un dispositif agencé pour asservir les déplacements du dispositif (22a,22b) à mouvements croisés à la valeur prédéterminée de l'angle d'inclinaison ($\phi$) du fil .

3. Machine selon la revendication 1, caractérisée par un dispositif agencé pour asservir l'angle de pivotement ($\alpha$) du guide-fil aux déplacements du dispositif (22a,22b) à mouvements croisés.

4. Machine selon la revendication 1, caractérisée par deux guides-fil (33,34) pivotables chacun autour d'un axe mobile (A,B) et parallèle à l'axe neutre (B), passant par chacun de ces guides (33,34) et se déplaçant avec eux.

5. Machine selon la revendication 1, caractérisée par le fait que la distance (E) entre des plans parallèles au plan de la trajectoire à découper et contenant chacun un guide (33,34) est réglable.

6. Machine selon la revendication 1, caractérisée par le fait qu'au moins le guide-fil déplaçable selon des mouvements croisés est un guide ouvert à encoche dans laquelle vient loger le fil-électrode (8) selon un certain profil de guidage.

7. Machine selon la revendication 6, caractérisée par le fait que l'orientation du guide-fil à encoche est asservie aux déplacements du dispositif (22a,22b) à mouvements croisés de manière à ce que le plan contenant cette encoche contienne également la partie du fil tendue entre les guides (33,34).

8. Machine selon la revendication 6, caractérisée par un dispositif d'asservissement agencé pour orienter deux guides-fil (33,34) ouverts à encoche de manière que leurs deux profils de guidage soient coplanaires avec la partie du fil tendue entre les guides (33,34).

9. Machine selon la revendication 6, caractérisée par un guide-fil ouvert en forme de galet fixe muni d'une gorge dans laquelle glisse le fil (8).

10. Machine selon la revendication 6, caractérisée en ce que guide-fil ouvert est une roulette tournant également autour d'un axe de révolution sensiblement parallèle au plan de la trajectoire à découper et munie d'une gorge périphérique (41,42) dans laquelle est engagé le fil (8), le plan de cette gorge étant perpendiculaire à l'axe de révolution.

11. Machine selon l'une des revendications précédentes, caractérisée en ce que les guides-fil (33,34) sont conducteurs de l'électricité et servent à l'alimentation du fil en courant d'usinage.

## Claims

1. Apparatus for machining by spark erosion an electrode workpiece (7) by means of an electrode wire (8) stretched and unwound between two wire guides (33, 34) with at least one cross-slide device (22a, 22b) carrying one of these wire guides and permitting to displace it into a plane parallel to the one of the trajectory to be cut so as to incline the wire by a predetermined angle ($\phi$) in relation to a neutral axis (B) which is perpendicular to said plane and characterized by the fact that said device (15, 16, 17, 18) permits also to pivot the wire guide on itself around a mobile axis (A) which is parallel to said neutral axis, passes by said guide and displaces itself with it.

2. The apparatus of claim 1 characterized by a device permitting to slave the displacements of the cross-slide device (22a, 22b) to the predetermined angle ($\phi$) of inclination of the wire.

3. The apparatus of claim 1 characterized by a device permitting to slave the angle of pivoting ($\alpha$) of the wire guide to the displacements of the cross-slide device (22a, 22b).

4. The apparatus of claim 1 characterized by two wire guides (33, 34) which are each pivotable around a mobile axis (A) which is parallel to said neutral axis (B), passes by each one of said wire guides (33, 34) and moves with them.

5. The apparatus of claim 1 characterized by the fact that the distance (E) between the planes which are parallel to the plane of the trajectory to be cut and contain each a wire guide (33, 34), can be regulated.

6. The apparatus of claim 1 characterized by the fact that at least one cross-slidable wire guide is an open guide with a gap in which lodges the electrode wire (8) according to a certain profile of guidance.

7. The apparatus of claim 6 characterized by the fact that the orientation of the wire guide with a gap is slaved to the displacements of the cross-slide device (22a, 22b) in such a way that the plane containing this gap contains also the part of the wire which is stretched between the guides (33, 34).

8. The apparatus of claim 6 characterized by a slaving device equipped or arranged for orienting two open wire guides (33, 34) with a gap in such a way that their two profiles of guidance should be coplanar with the part of the wire which is stretched between the guides (33, 34).

9. The apparatus of claim 6 characterized by an open wire guide in the form of a fixed roller fitted with a groove in which the wire moves.

10. The apparatus of claim 6 characterized by the fact that an open wire guide is a wheel which turns also around an axis of revolution almost parallel to the plane of the trajectory to be cut and which is provided with a peripheral groove (41, 42) in which the wire (8) fits, the plane of this groove being perpendicular to the axis of revolution.

11. The apparatus of claim 1 characterized by the fact that the wire guides are conductors of electricity and serve to feed the wire with the machining current.

## Patentansprüche

1. Maschine für die elektroerosive Bearbeitung einer Formelektrode (7) mittels einer Drahtelektrode (8), die zwischen zwei Drahtführungen (33, 34) gespannt und umgehaspelt wird, mit mindestens einer Kreuzverlagerungseinrichtung (22a, 22b), die eine der Drahtführungen trägt und für die Verlagerung in einer Ebene parallel zu der der Schneidbahn ausgelegt ist, um den Draht um einen vorbestimmten Winkel ($\phi$) relativ zu einer neutralen, senkrecht zu dieser Ebene verlaufenden Achse (B) zu neigen, dadurch gekennzeichnet, daß diese Einrichtung (15, 16, 17, 18) auch für das Verschwenken der Drahtführung auf sich selbst um eine zur neutralen Achse parallele bewegliche Achse (A), die durch diese Führung verläuft und sich mit ihr verlagert, ausgebildet ist.

2. Maschine nach Anspruch 1, gekennzeichnet durch eine Regeleinrichtung für die Verlagerungen der Kreuzverlagerungseinrichtung (22a, 22b) auf den vorbestimmten Wert des Neigungswinkels ($\phi$) des Drahts.

3. Maschine nach Anspruch 1, gekennzeichnet durch eine Regeleinrichtung für den Schwenkwinkel ($\alpha$) der Drahtführung auf die Verlagerung der Kreuzverlagerungseinrichtung (22a, 22b).

4. Maschine nach Anspruch 1, gekennzeichnet durch zwei um jeweils eine zur neutralen Achse parallele bewegliche Achse (A) verschwenkbare Drahtführungen (33, 34), welche Achsen durch jede dieser Führungen (33, 34) verlaufen und sich mit ihnen verlagern.

5. Maschine nach Anspruch 1, dadurch gekennzeichnet, daß der Abstand (E) zwischen zur Schneidbahn parallelen und jeweils eine Drahtführung (33, 34) enthaltenden Ebenen regulierbar ist.

6. Maschine nach Anspruch 1, dadurch gekennzeichnet, daß mindestens die kreuzweise verlagerbare Drahtführung eine offene Führung mit einer Nut ist, in die sich die Drahtelektrode (8) gemäß einem bestimmten Führungsprofil legt.

7. Maschine nach Anspruch 6, dadurch gekennzeichnet, daß die Orientierung der Drahtführung mit Nut bei Verlagerungen der Kreuzverlagerungseinrichtung (22a, 22b) derart geregelt wird, daß die diese Nut enthaltende Ebene auch die zwischen den Führungen (33, 34) gespannte Drahtpartie enthält.

8. Maschine nach Anspruch 6, gekennzeichnet durch eine Regeleinrichtung zum Orientieren zweier offener Drahtführungen (33, 34) mit Nut derart, daß ihre beiden Führungsprofile koplanar mit der zwischen den Führungen (33, 34) gespannten Drahtpartie sind.

9. Maschine nach Anspruch 6, gekennzeichnet durch eine offene Drahtführung in Form eines festen, mit einer Nut versehenen Führungsrolle, in welcher der Draht (8) gleitet.

10. Maschine nach Anspruch 6, dadurch gekennzeichnet, daß die offene Drahtführung eine Rolle ist, die gleichfalls um eine zur Schneidbahnebene im wesentlichen parallele Drehachse umläuft und mit einer Umfangsnut (41, 42), in der der Draht (8) liegt, versehen ist, wobei die Ebene dieser Nut senkrecht zur Drehachse ist.

11. Maschine nach einem der vorangehenden Ansprüche, dadurch gekennzeichnet, daß die Drahtführungen (33, 34) elektrische Leiter sind und der Speisung des Drahtes mit Bearbeitungsstrom dienen.

FIG. 1

FIG. 3a

FIG.2

FIG. 3b